# EUROPEAN PATENT SPECIFICATION

(11) **EP 4 358 057 B1**
(45) Date of publication and mention of the grant of the patent: **24.09.2025**
(21) Application number: 23204793.6
(22) Date of filing: 20.10.2023
(51) Int. Cl.: G08G 1/01, G08G 1/0967

(54) **SYSTEM FOR PROVIDING AUTONOMOUS DRIVING SAFETY MAP SERVICE**
SYSTEM ZUR BEREITSTELLUNG EINES SICHERHEITSKARTENDIENSTES FÜR AUTONOMES FAHREN
SYSTÈME POUR FOURNIR UN SERVICE DE CARTE DE SÉCURITÉ À CONDUITE AUTONOME

(30) Priority: 20.10.2022 KR 20220135815; 05.09.2023 KR 20230117376
(43) Date of publication of application: 24.04.2024
(73) Proprietor: Industry-Academic Cooperation Foundation Dankook University, Yongin-si, Gyeonggi-do 16890 (KR)
(72) Inventor: WOO, Samuel, 07960 Seoul (KR)
(74) Representative: Isarpatent

(56) References cited:
- CN-A- 115 200 603
- US-A1- 2018 268 168
- US-A1- 2018 342 165
- US-A1- 2019 128 679
- US-A1- 2021 129 845
- US-A1- 2021 181 753
- US-A1- 2022 126 864
- US-A1- 2022 281 456
- US-A1- 2022 292 971
- AL-MOMANI ALA'A ET AL: "Ride and Hide: A Study on the Privacy of Ride Hailing Services", 2019 IEEE VEHICULAR NETWORKING CONFERENCE (VNC), IEEE, 4 December 2019 (2019-12-04), pages 1 - 8, XP033754650, DOI: 10.1109/VNC48660.2019.9062820

## Description

### BACKGROUND

### 1. Field

Disclosed embodiments relate to a technology for providing autonomous driving safety map service.

### 2. Description of Related Art

Recently, as the number of vehicles equipped with an autonomous driving function has increased, the number of cases in which various kinds of autonomous vehicles drive on roads together with regular manual driving vehicles (vehicles driven directly by drivers) is increasing.

In order to implement the autonomous driving function, various kinds of sensors capable of recognizing the current state of a vehicle and the surrounding environment thereof, as well as hardware and software capable of controlling the driving of the vehicle based on the current state and the surrounding environment are essential. Depending on the vehicle model, vehicle manufacturer, model year, etc., the characteristics and performance of the autonomous driving function that may be implemented in a vehicle vary. In addition, at this point in time, most autonomous vehicles are not fully autonomous, but offer a level of autonomous driving that requires driver intervention in certain situations. For example, if it is difficult to recognize lanes properly due to poor road conditions, if an accident has occurred or construction is underway on a road, or if a sensor's visibility is limited due to bad weather, it is not possible for the autonomous driving function to operate properly. In this case, it is impossible for an autonomous vehicle to perform autonomous driving, and thus, the autonomous vehicle requests a driver to directly operate the vehicle, or outputs an error message.

If an anomaly of the autonomous driving function is caused by the surrounding environment rather than a problem of a vehicle itself (e.g., when lanes are erased due to the aging of a road, or when it is difficult for an autonomous driving module to properly recognize the road situation due to the characteristics of the road), the above case is highly likely to occur simultaneously not to a specific vehicle, but to most autonomous vehicles passing on a corresponding road. On the contrary, if an anomaly of the autonomous driving function is caused by a problem with a specific sensor installed in a vehicle, the problem is highly likely to occur only in vehicles of the vehicle model equipped with the corresponding sensor. Therefore, servicing, in the form of a map, information such as the environment, location, or vehicle model in which anomalies of the autonomous driving function frequently occur may be of great help in safe driving of autonomous vehicles.

US 2021/129845 A1 provides a computing system that can receive sensor log data from one or more first autonomous vehicles (AVs) operating along one or more routes. US 2021/181753 A1 relates to configuring vehicle control systems based on areas known for driving hazards proximate to a location of a vehicle to cause the vehicle control systems to prioritize assessment of ancillary data for the driving hazards while the vehicle is in the known areas. US 2022/281456 A1 relates to systems for terrain-based localization and insights for systems in vehicles. US 2018/342165 A1 provides an on-demand transport system can manage an on-demand transportation service for a given region by matching requesting users with drivers and the AVs, where the AVs utilize localization maps and five sensor data to autonomously operate throughout the given region.

### SUMMARY

The present invention is set out by the appended independent claims. Advantageous embodiments are provided in dependent claims.

The disclosed embodiments are to provide a technology for calculating the degree of risk of autonomous driving on a road and servicing the same in the form of a map.

According to the present invention, there is provided a system for providing autonomous driving safety map service, as defined by independent claim 1. The system includes, an autonomous vehicle configured to transmit anomaly information of an autonomous driving system acquired during the driving of the vehicle, and a server for providing safety map service, configured to receive the anomaly information of the autonomous driving system from one or more of the autonomous vehicles driving within a specific area, generate autonomous driving danger zone information based on one or more of the location of occurrence of the anomaly information or identification information of the autonomous vehicle, and provide the generated autonomous driving danger zone information in conjunction with a map of the specific area.

In an embodiment, the anomaly information of the autonomous driving system may be generated based on one or more of whether a takeover request message has been generated in the autonomous vehicle, whether driver intervention has occurred in the driving of the autonomous vehicle, or whether an error message of the autonomous driving system has been generated.

In an embodiment, the identification information of the autonomous vehicle may include a vehicle identification number (VIN) of the autonomous vehicle.

In an embodiment, when the autonomous vehicle is located within a predetermined information transmission restricted area, the autonomous vehicle may stop transmitting the anomaly information.

In an embodiment, when the autonomous vehicle is located within a predetermined range from the origin or destination of a route set by a user of the autonomous vehicle, the autonomous vehicle may stop transmitting the anomaly information.

In an embodiment, the autonomous vehicle may transmit the anomaly information based on a predetermined information transmission rate.

According to the present invention, the autonomous vehicle is configured to encrypt the anomaly information of the autonomous driving system by using an encryption-based privacy assurance technique and then configured to transmit the encrypted anomaly information to the server for providing autonomous driving safety map service.

According to the present invention, the encryption-based privacy assurance technique includes one or more of homomorphic encryption or functional encryption.

According to the present invention, the server is configured to classify the encrypted anomaly information based on one or more of the location of occurrence of the anomaly information or identification information of the autonomous vehicle.

According to the present invention, only when the number of the encrypted anomaly information classified according to a specific location or specific identification information is greater than a preset threshold value, the server for autonomous driving safety map service is configured to decrypt the corresponding anomaly information to generate the autonomous driving danger zone information.

In an embodiment, the server may generate the autonomous driving danger zone information by further reflecting environmental information related to the location of occurrence of the anomaly information in the anomaly information.

In an embodiment, the server may receive destination information from the user of the autonomous vehicle to generate a route plan to the destination based on the autonomous driving danger zone information.

In another general aspect, there is provided a server for providing autonomous driving safety map service, wherein the server includes a vehicle information collecting module configured to receive anomaly information of an autonomous driving system from an autonomous vehicle driving within a specific area, a danger zone identifying module configured to generate autonomous driving danger zone information based on one or more of the location of occurrence of the anomaly information or identification information of the autonomous vehicle, and an information providing module configured to provide the generated autonomous driving danger zone information in conjunction with a map of the specific area.

In an embodiment, the anomaly information of the autonomous driving system may be generated based on one or more of whether a takeover request message has been generated in the autonomous vehicle, whether driver intervention has occurred in the driving of the autonomous vehicle, or whether an error message of the autonomous driving system has been generated.

In an embodiment, the identification information of the autonomous vehicle may include a vehicle identification number (VIN) of the autonomous vehicle.

According to the invention, the autonomous vehicle encrypts the anomaly information of the autonomous driving system by using an encryption-based privacy assurance technique and is then configured to transmit the encrypted anomaly information to the server for providing autonomous driving safety map service.

The encryption-based privacy assurance technique including one or more of homomorphic encryption or functional encryption.

In accordance with the invention, the danger zone identifying module classifies the encrypted anomaly information based on one or more of the location of occurrence of the anomaly information or identification information of the autonomous vehicle.

Also in accordance to the invention, only when the number of the encrypted anomaly information classified according to a specific location or specific identification information is greater than a preset threshold value, the danger zone identifying module decrypts the corresponding anomaly information to generate the autonomous driving danger zone information.

According to the present invention, there is provided, as a method performed on a server for providing autonomous driving safety map service, as defined by independent claim 9. The method includes receiving anomaly information of an autonomous driving system from an autonomous vehicle driving within a specific area, generating autonomous driving danger zone information based on one or more of the location of occurrence of the anomaly information or identification information of the autonomous vehicle, and providing the generated autonomous driving danger zone information in conjunction with a map of the specific area.

In an embodiment, the anomaly information of the autonomous driving system may be generated based on one or more of whether a takeover request message has been generated in the autonomous vehicle, whether driver intervention has occurred in the driving of the autonomous vehicle, or whether an error message of the autonomous driving system has been generated.

According to the present invention, the autonomous vehicle is configured to encrypt the anomaly information of the autonomous driving system by using an encryption-based privacy assurance technique and then configured to transmit the encrypted anomaly information to the server, and the encryption-based privacy assurance technique may include one or more of homomorphic encryption or functional encryption.

According to the present invention, the generating autonomous driving danger zone information includes classifying the encrypted anomaly information based on one or more of the location of occurrence of the anomaly information or identification information of the autonomous vehicle.

In accordance with the invention, only when the number of the encrypted anomaly information classified according to a specific location or specific identification information is greater than a preset threshold value, the generating autonomous driving danger zone information may include decrypting the corresponding anomaly information to generate the autonomous driving danger zone information.

### BRIEF DESCRIPTION OF THE DRAWINGS

FIG. 1 is a block diagram for describing a system for providing autonomous driving safety map service according to an embodiment.
FIG. 2 is a block diagram for describing a detailed configuration of a server for providing autonomous driving safety map service according to an embodiment.
FIG. 3 and FIG. 4 are illustrative diagrams showing an example in which an anomaly of an autonomous driving system occurs.
FIG. 5 is an illustrative diagram showing an example of displaying an autonomous driving danger zone on a map in a system for providing autonomous driving safety map service according to an embodiment.
FIG. 6 is a flowchart for describing a method for providing autonomous driving safety map service according to an embodiment.
FIG. 7 is a flowchart for describing a process of generating autonomous driving danger zone information 604 when an encryption-based privacy assurance technique is used in a system for providing autonomous driving safety map service according to an embodiment.
FIG. 8 is a block diagram for illustratively describing a computing environment including a computing device suitable for use in exemplary embodiments.

### DETAILED DESCRIPTION

Hereinafter, specific embodiments of the present invention will be described with reference to the accompanying drawings. The following detailed description is provided to assist in a comprehensive understanding of the methods, devices and/or systems described herein. However, the detailed description is only illustrative, and the present invention is not limited thereto.

In describing embodiments of the present invention, when a specific description of known technology associated with the present invention is deemed to make the gist of the present invention unnecessarily vague, the detailed description thereof will be omitted. The terms used below are defined in consideration of functions in the present invention, but may vary in accordance with the customary practice or the intention of a user or an operator. Therefore, the terms should be defined based on whole content throughout the present specification. The terms used herein are only for describing the embodiments of the present invention, and should not be construed as limited. A singular expression includes a plural meaning unless clearly used otherwise. In the present description, expressions such as "include" or "have" are for referring to certain characteristics, numbers, steps, operations, components, and some or combinations thereof, and should not be construed as excluding the presence or possibility of one or more other characteristics, numbers, steps, operations, components, and some or combinations thereof besides those described.

In the following description, the terms "transmission," "communication," and "reception" of a signal or information and other similar terms may include a meaning in which the signal or information is directly transmitted from one element to another element and transmitted from one element to another element through an intervening element. In particular, "transmission" or "sending" of the signal or information to one element may indicate a final destination of the signal or information and may not imply a direct destination. The same applies to "reception" of the signal or information. In addition, in the present specification, a meaning in which two or more pieces of data or information are "related" indicates that when any one piece of data (or information) is obtained, at least a portion of other data (or information) may be obtained based thereon.

Furthermore, the terms "first," "second," and the like may be used for describing various elements, but the elements should not be construed as being limited by the terms. These terms may be used for distinguishing one element from another element. For example, a first element could be termed a second element and vice versa without departing from the scope of the present invention.

There are various criteria for classifying the level of an autonomous driving technology, but in general, six levels of subdivided contents from Level 0 to Level 5 defined by the Society of Automotive Engineers (SAE International) are internationally accepted. For example, Level 1 is a driver assistance level, in which only specific functions of a level that assists a driver, such as speed and lane keeping systems, etc., are automated, and the driver should always control the speed and direction. Level 2 is a partial automation level that assists a driver in maintaining lane spacing, steering, accelerating, and decelerating under a constant situation such as a highway, and the driver always keeps an eye on the surrounding situation and actively intervenes in driving when necessary. Level 3 is a conditional automation level that enables autonomous driving under limited conditions, in which active intervention from a driver is not required during driving, but the driver intervenes when limit conditions for autonomous driving such as unexpected situations are met while keeping an eye on the surrounding situation. Level 4 is a high automation level that enables all safety controls under specific road conditions, in which autonomous driving is possible in all situations under specified road conditions, but which requires a driving control device since a driver intervenes in specific situations such as bad weather. Lastly, Level 5 is a full automation level, which does not require a driver and enables driving only with a passenger. At this level, when the passenger simply inputs a destination, a system takes charge of all the driving, which does not require a controller for steering or accelerating/decelerating.

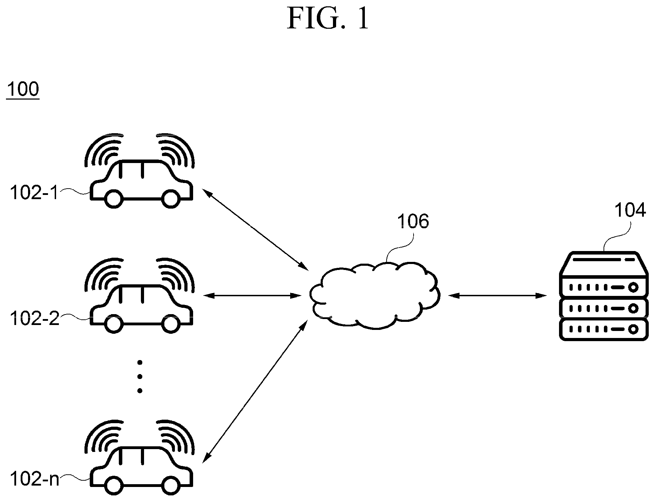

FIG. 1 is a block diagram for describing a system for providing autonomous driving safety map service 100 according to an embodiment. As illustrated, the system for providing autonomous driving safety map service 100 according to an embodiment includes an autonomous vehicle 102 and a server for providing autonomous driving safety map service 104 (hereinafter, referred to as the 'server').

The autonomous vehicle 102 is a vehicle with an autonomous driving function. The autonomous vehicle 102 includes an autonomous driving system. In the disclosed embodiments, the autonomous vehicle 102 may include, without limitation, a vehicle in which any one of the above-described levels of autonomous driving functions are implemented.

The autonomous vehicle 102 transmits autonomous driving-related information collected during the driving of the vehicle to the server 104. At this time, the autonomous driving-related information includes anomaly information of the autonomous driving system, which is acquired while the autonomous vehicle 102 is driving in an autonomous driving mode.

In an embodiment, the anomaly information of the autonomous driving system may be generated based on one or more of whether a takeover request message has been generated in the autonomous vehicle 102, whether driver intervention has occurred in the driving of the autonomous vehicle 102, or an error message of the autonomous driving system has been generated.

For example, an autonomous vehicle 102 of Level 5 or lower may require driver intervention during autonomous driving depending on the situation. In this case, the autonomous vehicle 102 may output a takeover request message to guide a driver to manual driving. The takeover request message may be delivered to the driver in a visual (e.g., dashboard messages or warning light) or audible (e.g., warning sound) form. In addition, in some cases, even if there is no take over request from the autonomous vehicle 102, the driver may intervene in driving of the vehicle by directly operating a steering system or a braking system if it is determined that the driver intervention is required. Depending on the embodiment, the driver intervention may be divided into weak intervention (e.g., slight adjustment to the steering device or slight additional braking in a situation in which braking by the autonomous driving system is performed, etc.) or strong intervention (e.g., the steering device is operated contrary to the autonomous driving system or strong braking is performed in a section in which the autonomous driving system determines that braking is not required, etc.). In this case, the autonomous vehicle 102 may determine that an anomaly has occurred in the autonomous driving system only when the strong intervention has occurred.

In addition, when it is determined that an error has occurred in the autonomous driving system for various reasons, the autonomous vehicle 102 may output an error message corresponding thereto. For example, when the autonomous vehicle 102 detects a malfunction or error in the autonomous driving system caused by poor road conditions (e.g., erased lanes, lanes that cannot be processed into images due to road crack repair work) or bad weather, the autonomous vehicle 102 may notify the server 104 of the malfunction or error. In this case, depending on the vehicle manufacturer or vehicle model, detailed information on the malfunction may vary.

The autonomous vehicle 102 may generate anomaly information of the autonomous driving system and transmit the same to the server 104 when various abnormal situations related to autonomous driving as described above occur.

In an embodiment, the anomaly information of the autonomous driving system may include information on a location at which an anomaly has occurred, identification information of the autonomous vehicle 102, road driving videos, information on a module in which an error has occurred, type and content of the anomaly, etc.

In an embodiment the identification information of the autonomous vehicle 102 may include a vehicle identification number (VIN) of the autonomous vehicle 102. When the vehicle identification number is used, various information such as the vehicle model, model year, manufacturer, etc., of the autonomous vehicle 102 that has transmitted the anomaly information may be obtained, so that various types of autonomous driving danger zone information may be generated by using the same.

In an embodiment, the location information may be a global navigation satellite system (GNSS)-based information, such as a GPS, a GLONASS, a Galileo, a Beidou-2, or the like. In other embodiments, the location information may be precise location information. For example, the location information may be location information based on a satellite based augmentation system (SBAS). The SBAS is a system that provides correction information and integrity information on a signal error provided by the GNSS through a geostationary satellite. When precise location information such as the SBAS is used, not only the type of a road on which the autonomous vehicle 102 is driving, but also information on a lane on which the autonomous vehicle 102 is currently driving may be identified. In this case, the server 104 may acquire additional information on whether an anomaly of the autonomous driving system occurs on the entire road at the corresponding location or only on a specific lane.

In some embodiments, when a recognized location of the autonomous vehicle 102 is within a predetermined information transmission restricted area, the autonomous vehicle 102 may stop transmitting the anomaly information of the autonomous driving system. In some other embodiments, when the location of the autonomous vehicle 102 is within a predetermined range from the origin or destination of a route set by a user, the autonomous vehicle 102 may stop transmitting the anomaly information. For example, when a driver moves from home to a workplace using the autonomous vehicle 102, the autonomous vehicle 102 may not transmit the anomaly information within a predetermined range from the home (origin) or the workplace (destination).

In many cases, a vehicle travels between specific places, such as residences, workplaces, schools, or the like. Therefore, a third party with malicious intent may use the transmission location of anomaly information transmitted from the autonomous vehicle 102 to infer personal information such as the residence of an owner of the autonomous vehicle 102. In the same way, there is a possibility of finding out personal information related to the autonomous vehicle 102 through information such as an origin, destination, or the like set in a navigation system in the autonomous vehicle 102. In order to solve the above problem, in the disclosed embodiments, a specific area such as a residence or workplace, or an area within a predetermined range from the origin or destination of a route set by a user is set as an information transmission restricted area, and the transmission of anomaly information of an autonomous driving system is restricted in the corresponding area to prevent the possibility of leakage of personal information of a vehicle owner, etc.

Meanwhile, in some embodiments, the autonomous vehicle 102 may be configured to transmit the anomaly information based on a predetermined information transmission rate. For example, when the information transmission rate is set to 40%, the autonomous vehicle 102 may transmit only 40% of the total anomaly information generated in the autonomous driving system to the server 104. When the information transmission rate is lowered, the amount of collection of autonomous driving anomaly information may be reduced from the perspective of the server 104, but the risk of leakage of personal information may also be reduced. In order to compensate for the above, the server 104 may grant incentives, such as points or a reduction in service usage fees, to a user who has set a high information transmission rate.

The autonomous vehicle 102 is adapted to encrypt the anomaly information of the autonomous driving system by using an encryption-based privacy assurance technique and then transmit the encrypted anomaly information to the server 104. At this time, the encryption-based privacy assurance technique refers to a technique that allows calculations in an encrypted state. In accordance to the invention, encryption-based privacy assurance technique includes one or more of homomorphic encryption or functional encryption. When the above technique is used, the server 104 adds up the number of anomalies for each specific location or vehicle of a specific manufacturer without decrypting individual anomaly information received, so that it is possible to minimize leakage of personal information that may occur during a process of collecting anomaly information.

The server 104 receives anomaly information of an autonomous driving system from one or more of the autonomous vehicles 102 driving within a specific area. The illustrated embodiment shows an example in which the server 104 receives anomaly information of an autonomous driving system from n autonomous vehicles 102 (n is a natural number), which are respectively referred to as 102-1, 102-2, ..., and 102-n.

The server 104 generates autonomous driving danger zone information based on one or more of the location of occurrence of the received anomaly information of the autonomous driving system or identification information of the autonomous vehicle 102 that has transmitted the corresponding anomaly information, and provides the generated autonomous driving danger zone information in conjunction with a map of the specific area.

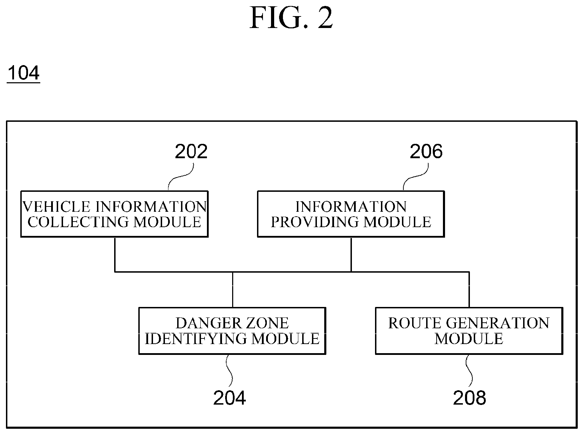

FIG. 2 is a block diagram for describing a detailed configuration of the server for providing autonomous driving safety map service 104 according to an embodiment. As illustrated, the server 104 includes a vehicle information collecting module 202, a danger zone identifying module 204, and an information providing module 206.

The vehicle information collecting module 202 receives anomaly information of an autonomous driving system from one or more of the autonomous vehicles 102 driving on a road within a preset area.

The danger zone identifying module 204 generates autonomous driving danger zone information based on one or more of the location of occurrence of the anomaly information or identification information of the autonomous vehicle 102.

The information providing module 206 provides the generated autonomous driving danger zone information in conjunction with a map of the specific area. For example, the information providing module 206 may provide information on a section in which a malfunction of the autonomous driving module frequently occurs. According to an embodiment, the information providing module 206 may provide information on a section in which all autonomous driving modules malfunction or a section in which an autonomous driving module of a particular manufacturer malfunctions.

Meanwhile, in some embodiments, the server 104 may further include a route generation module 208. The route generation module 208 may receive destination information from a user (e.g., driver) of the autonomous vehicle 102, and generate a route plan to the destination based on the autonomous driving danger zone information. For example, the route generation module 208 may generate the route plan such that the proportion of the autonomous driving danger zone in possible routes to the destination is minimized.

As described above, in accordance to the claimed invention, the autonomous vehicle 102 encrypts the anomaly information of the autonomous driving system by using an encryption-based privacy assurance technique and then transmits the encrypted anomaly information to the server 104. In this case, the danger zone identifying module 204 classifies the encrypted anomaly information based on one or more of the location of occurrence of the anomaly information or identification information of the autonomous vehicle without decrypting the anomaly information. Here, the identification information of the autonomous vehicle may include, without limitation, various information that may be used to classify the autonomous vehicle, such as the vehicle model, model year, and manufacturer of the autonomous vehicle, type of the autonomous vehicle module, etc.

According to the claimed invention, homomorphic encryption or functional encryption is used, the server 104 adds up the number of pieces of information on autonomous driving anomalies occurring in a specific location (e.g., a vicinity of an intersection A) or a specific vehicle type without decrypting individual anomaly information. Only when the number of the encrypted anomaly information classified according to a specific location or specific identification information is greater than a preset threshold value, the danger zone identifying module 204 decrypts the corresponding anomaly information to generate the autonomous driving danger zone information. When only the anomaly information greater than the threshold value is decrypted as described above, all anomaly information is not required to be decrypted, so that the computing resource of the server 104 may be efficiently used and the risk of personal information leakage due to decryption may be reduced.

In an embodiment, the danger zone identifying module 204 may generate the autonomous driving danger zone information by further reflecting environmental information related to the location of occurrence of the anomaly information in the anomaly information. For example, if weather conditions such as heavy rain or haze in the corresponding area at the time an anomaly has occurred to the autonomous driving function, or time information such as day/night is further reflected, the cause of the autonomous driving anomaly may be more closely analyzed.

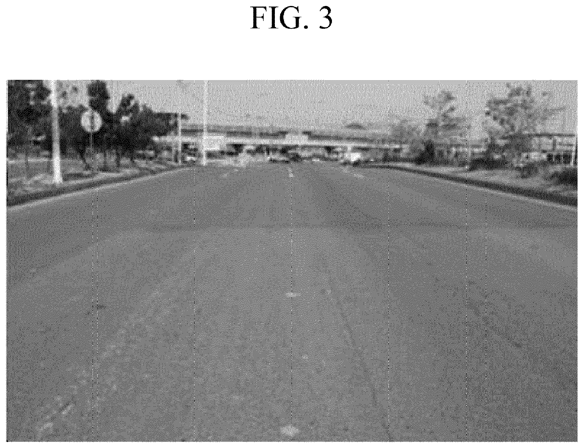

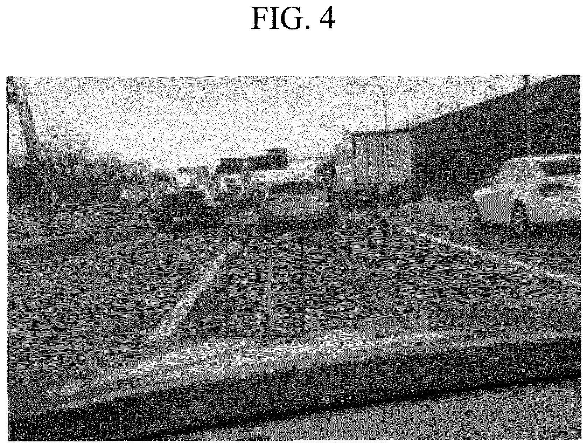

FIG. 3 and FIG. 4 are illustrative diagrams showing an example in which an anomaly of an autonomous driving system occurs. FIG. 3 is an illustrative diagram illustrating a section in which an autonomous vehicle cannot properly recognize a lane because the lane on a road has been erased, and FIG. 4 is an illustrative diagram illustrating a section in which an autonomous vehicle mistakenly recognizes a crack repair line generated by crack repair on a road as a lane. As such, when the road condition is poor or the autonomous driving module does not operate properly, the autonomous vehicle 102 may provide information on the same to the server 104.

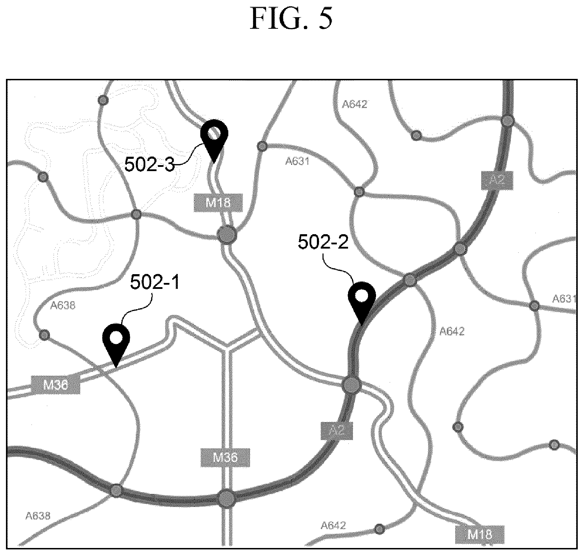

FIG. 5 is an illustrative diagram showing an example of displaying an autonomous driving danger zone on a map in the system for providing autonomous driving safety map service 100 according to an embodiment. As illustrated, the information providing module 206 of the system for providing autonomous driving safety map service 100 may service information on autonomous driving danger zones in the form of a map, similar to an accident-prone area notification in a navigation system. In an embodiment, the information providing module 206 may display the information on autonomous driving danger zones by using one or more location pins 502-1, 502-2, and 502-3. In another embodiment, the information providing module 206 may display the color of a road corresponding to an autonomous driving danger zone differently to be visually distinguished from other roads. It should be noted that the disclosed embodiments are not limited to a specific display format for autonomous driving danger zones.

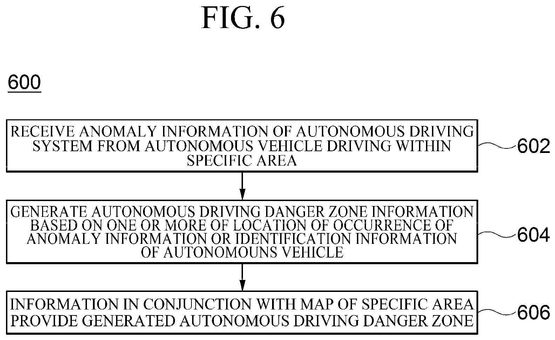

FIG. 6 is a flowchart for describing a method 600 for providing autonomous driving safety map service according to an embodiment. The illustrated method may be performed in a computing device with one or more processors and a memory that stores one or more programs executed by the one or more processors, for example, the server for providing autonomous driving safety map service 104 according to an embodiment. In the illustrated flowchart, the method or process is disclosed by being divided into a plurality of steps. However, at least some of the steps may be performed in a different order, performed by being combined with other steps, omitted, performed by being divided into detailed steps, or performed by being added with one or more steps not illustrated.

In Step 602, the vehicle information collecting module 202 receives anomaly information of an autonomous driving system from the autonomous vehicle 102 driving within a specific area.

In Step 604, the danger zone identifying module 204 generates autonomous driving danger zone information based on one or more of the location of occurrence of the anomaly information or identification information of the autonomous vehicle 102.

In Step 606, the information providing module 206 provides the generated autonomous driving danger zone information in conjunction with a map of the specific area.

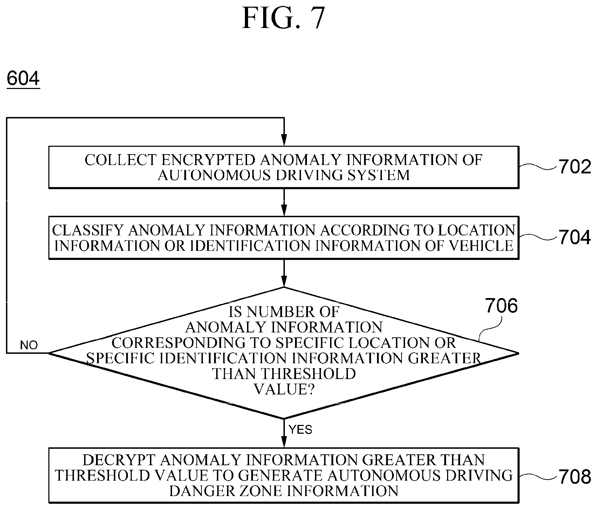

FIG. 7 is a flowchart for describing the process of generating autonomous driving danger zone information 604 when an encryption-based privacy assurance technique is used in the system for providing autonomous driving safety map service 100 according to the claimed invention.

In Step 702, the danger zone identifying module 204 collects encrypted anomaly information of the autonomous driving system by using an encryption-based privacy assurance technique.

In Step 704, the danger zone identifying module 204 classifies the encrypted anomaly information based on one or more of the location of occurrence of the anomaly information or identification information of the autonomous vehicle without decrypting the anomaly information.

In Step 706, the danger zone identifying module 204 determines whether the number of pieces of anomaly information corresponding to a specific location or specific identification information is greater than a threshold value.

When it is determined that the number is greater than the threshold value, in Step 708, the danger zone identifying module 204 decrypts anomaly information greater than the threshold value to generate autonomous driving danger zone information.

On the contrary, when it is determined that the number is not greater than the threshold value, the danger zone identifying module 204 returns to Step 702 and further collects anomaly information of the autonomous driving system.

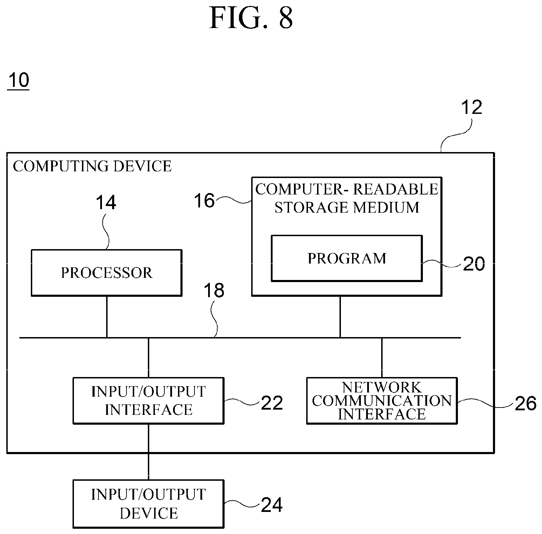

FIG. 8 is a block diagram for illustratively describing a computing environment 10 including a computing device suitable for use in exemplary embodiments. In the illustrated embodiment, each component may have different functions and capabilities in addition to those described below, and additional components may be included in addition to those described below.

The illustrated computing environment 10 includes a computing device 12. In some embodiments, the computing device 12 may be any one of an autonomous driving system mounted on the autonomous vehicle 102 or the server 104 for providing autonomous driving safety map service. The computing device 12 includes at least one processor 14, a computer-readable storage medium 16, and a communication bus 18. The processor 14 may enable the computing device 12 to operate according to the exemplary embodiment mentioned above. For example, the processor 14 may execute one or more programs stored in the computer-readable storage medium 16. The one or more programs may include one or more computer-executable commands, and when executed by the processor 14, the computer-executable command may be configured to enable the computing device 12 to perform operations according to the exemplary embodiment.

The computer-readable storage medium 16 is configured to store computer-executable commands or program codes, program data, and/or other suitable types of information. A program 20 stored in the computer-readable storage medium 16 includes a set of commands executable by the processor 14. In an embodiment, the computer-readable storage medium 16 may be a memory (a volatile memory such as a random access memory, a non-volatile memory, or a suitable combination thereof), one or more magnetic disk storage devices, optical disk storage devices, flash memory devices, other types of storage media accessed by the computing device 12 and capable of storing desired information, or any suitable combination thereof.

The communication bus 18 includes the processor 14 and the computer-readable storage medium 16 to interconnect various other components of the computing device 12.

The computing device 12 may also include one or more input/output interfaces 22 which provide an interface for one or more input/output devices 24, and one or more network communication interfaces 26. The input/output interface 22 and the network communication interface 26 are connected to the communication bus 18. The input/output device 24 may be connected to other components of the computing device 12 through the input/output interface 22. The exemplary input/output device 24 may include a pointing device (such as a mouse or track pad), a keyboard, a touch input device (such as a touch pad or touch screen), a voice or sound input device, an input device such as various types of sensor devices and/or photographing devices, and/or an output device such as a display device, a printer, a speaker, and/or a network card. The exemplary input/output device 24 may be included inside the computing device 12 as one component constituting the computing device 12, or may be connected to the computing device 12 as a separate device distinct from the computing device 12.

According to the disclosed embodiments, if a malfunction of an autonomous driving system is detected while an autonomous vehicle is driving on a road, one or more of corresponding location information and a road driving video are transmitted to a server, and the server analyzes a factor that interfere with autonomous driving based on the collected information and services the same in the form of a map to allow an autonomous driving vehicle and a driver of the corresponding vehicle to visually and easily determine the degree of risk of autonomous driving on a road on which the vehicle and the driver are driving or scheduled to drive.

In addition, according to the disclosed embodiments, the stability of autonomous driving may be increased by setting a route to the destination of an autonomous vehicle based on the degree of risk of autonomous driving.

Although representative embodiments of the present invention have been described in detail above, those skilled in the art to which the present invention belongs will understand that various modifications may be made to the above-described embodiments without departing from the scope of the present invention. Therefore, the scope of rights of the present invention should not be limited to the described embodiments, but should be defined by the appended claims.

## Claims

1. A system (100) for providing an autonomous driving safety map service, comprising:
an autonomous vehicle (102) configured to transmit anomaly information of an autonomous driving system acquired during the driving of the vehicle (102); and
a server (104) for providing safety map service, configured to receive the anomaly information of the autonomous driving system from one or more of the autonomous vehicles driving within a specific area, generate autonomous driving danger zone information based on one or more of the location of occurrence of the anomaly information or identification information of the autonomous vehicle (102), and provide the generated autonomous driving danger zone information in conjunction with a map of the specific area,
wherein the autonomous vehicle (102) is configured to encrypt the anomaly information of the autonomous driving system by using an encryption-based privacy assurance technique and then configured to transmit the encrypted anomaly information to the server (104) for providing autonomous driving safety map service, and
the encryption-based privacy assurance technique comprises one or more of homomorphic encryption or functional encryption,
wherein the server (104) is configured to classify the encrypted anomaly information based on one or more of the location of occurrence of the anomaly information or identification information of the autonomous vehicle (102), and
only when the number of the encrypted anomaly information classified according to a specific location or specific identification information is greater than a preset threshold value, the server (104) for autonomous driving safety map service is configured to decrypt the corresponding anomaly information to generate the autonomous driving danger zone information.

2. The system (100) of claim 1, wherein the anomaly information of the autonomous driving system is generated based on one or more of whether a takeover request message has been generated in the autonomous vehicle (102), whether driver intervention has occurred in the driving of the autonomous vehicle (102), or whether an error message of the autonomous driving system has been generated.

3. The system (100) of claim 1, wherein the identification information of the autonomous vehicle (102) comprises a vehicle identification number, VIN, of the autonomous vehicle (102).

4. The system (100) of claim 1, wherein when the autonomous vehicle (102) is located within a predetermined information transmission restricted area, the autonomous vehicle (102) is configured to stop transmitting the anomaly information.

5. The system (100) of claim 1, wherein when the autonomous vehicle (102) is located within a predetermined range from the origin or destination of a route set by a user of the autonomous vehicle (102), the autonomous vehicle (102) is configured to stop transmitting the anomaly information.

6. The system (100) of claim 1, wherein the autonomous vehicle (102) is configured to transmit the anomaly information based on a predetermined information transmission rate.

7. The system (100) of claim 1, wherein the server (104) is configured to generate the autonomous driving danger zone information by further reflecting environmental information related to the location of occurrence of the anomaly information in the anomaly information.

8. The system (100) of claim 1, wherein the server (104) is configured to receive destination information from the user of the autonomous vehicle (102) to generate a route plan to the destination based on the autonomous driving danger zone information.

9. A method (600), which is executed on a server (104) for providing autonomous driving safety map service, comprising:
receiving (602) anomaly information of an autonomous driving system from an autonomous vehicle (102) driving within a specific area;
generating (604) autonomous driving danger zone information based on one or more of the location of occurrence of the anomaly information or identification information of the autonomous vehicle (103); and
providing (606) the generated autonomous driving danger zone information in conjunction with a map of the specific area,
wherein the autonomous vehicle (102) encrypts the anomaly information of the autonomous driving system by using an encryption-based privacy assurance technique and then transmits the encrypted anomaly information to the server (104), and
the encryption-based privacy assurance technique comprises one or more of homomorphic encryption or functional encryption,
wherein the generating autonomous driving danger zone information comprises classifying the encrypted anomaly information based on one or more of the location of occurrence of the anomaly information or identification information of the autonomous vehicle 102), and wherein only when the number of the encrypted anomaly information classified according to a specific location or specific identification information is greater than a preset threshold value, the server (104) for autonomous driving safety map service decrypts the corresponding anomaly information to generate the autonomous driving danger zone information.

10. The method (600) of claim 9, wherein the anomaly information of the autonomous driving system is generated based on one or more of whether a takeover request message has been generated in the autonomous vehicle (102), whether driver intervention has occurred in the driving of the autonomous vehicle, or whether an error message of the autonomous driving system has been generated.

## Patentansprüche

1. System (100) zum Bereitstellen eines Sicherheitskartendienstes für autonomes Fahren, umfassend:
ein autonomes Fahrzeug (102), das dazu eingerichtet ist, Anomalie-Informationen eines autonomen Fahrsystems, die während des Fahrens des Fahrzeugs (102) erfasst werden, zu senden; und
einen Server (104) zum Bereitstellen eines Sicherheitskartendienstes, der dazu eingerichtet ist, die Anomalie-Informationen des autonomen Fahrsystems von einem oder mehreren der innerhalb eines spezifischen Gebiets fahrenden autonomen Fahrzeuge zu empfangen, Gefahrenzoneninformationen für autonomes Fahren auf der Grundlage eines oder mehrerer des Ereignisortes der Anomalie-Informationen oder von Identifikationsinformationen des autonomen Fahrzeugs (102) zu generieren, und die generierten Gefahrenzoneninformationen für autonomes Fahren in Verbindung mit einer Karte des spezifischen Gebiets bereitzustellen,
wobei das autonome Fahrzeug (102) dazu eingerichtet ist, die Anomalie-Informationen des autonomen Fahrsystems unter Verwendung einer verschlüsselungsbasierten Datenschutzsicherstellungstechnik zu verschlüsseln, und dann dazu eingerichtet ist, die verschlüsselten Anomalie-Informationen an den Server (104) zum Bereitstellen eines Sicherheitskartendienstes für autonomes Fahren zu senden, und
die verschlüsselungsbasierte Datenschutzsicherstellungstechnik eines oder mehrere von homomorpher Verschlüsselung oder funktionaler Verschlüsselung umfasst,
wobei der Server (104) dazu eingerichtet ist, die verschlüsselten Anomalie-Informationen auf der Grundlage eines oder mehrerer des Ereignisortes der Anomalie-Informationen oder von Identifikationsinformationen des autonomen Fahrzeugs (102) zu klassifizieren, und
nur dann, wenn die Anzahl der verschlüsselten Anomalie-Informationen, die gemäß einem spezifischen Ort oder spezifischen Identifikationsinformationen klassifiziert sind, größer als ein voreingestellter Schwellenwert ist, der Server (104) für den Sicherheitskartendienst für autonomes Fahren dazu eingerichtet ist, die entsprechenden Anomalie-Informationen zu entschlüsseln, um die Gefahrenzoneninformationen für autonomes Fahren zu generieren.

2. System (100) nach Anspruch 1, wobei die Anomalie-Informationen des autonomen Fahrsystems auf der Grundlage eines oder mehrerer von Folgendem generiert werden: ob eine Übernahmeanforderungsmeldung in dem autonomen Fahrzeug (102) generiert wurde, ob eine Fahrerintervention beim Fahren des autonomen Fahrzeugs (102) stattgefunden hat, oder ob eine Fehlermeldung des autonomen Fahrsystems generiert wurde.

3. System (100) nach Anspruch 1, wobei die Identifikationsinformationen des autonomen Fahrzeugs (102) eine Fahrzeugidentifikationsnummer (Vehicle Identification Number, VIN) des autonomen Fahrzeugs (102) umfassen.

4. System (100) nach Anspruch 1, wobei, wenn sich das autonome Fahrzeug (102) innerhalb eines zuvor festgelegten informationsübertragungsbeschränkten Gebiets befindet, das autonome Fahrzeug (102) dazu eingerichtet ist, das Senden der Anomalie-Informationen zu stoppen.

5. System (100) nach Anspruch 1, wobei, wenn sich das autonome Fahrzeug (102) innerhalb einer zuvor festgelegten Entfernung vom Ausgangspunkt oder Zielpunkt einer durch einen Benutzer des autonomen Fahrzeugs (102) festgelegten Route befindet, das autonome Fahrzeug (102) dazu eingerichtet ist, das Senden der Anomalie-Informationen zu stoppen.

6. System (100) nach Anspruch 1, wobei das autonome Fahrzeug (102) dazu eingerichtet ist, die Anomalie-Informationen auf der Grundlage einer zuvor festgelegten Informationsübertragungsrate zu senden.

7. System (100) nach Anspruch 1, wobei der Server (104) dazu eingerichtet ist, die Gefahrenzoneninformationen für autonomes Fahren zu generieren, indem er des Weiteren Umgebungsinformationen in Bezug auf den Ereignisort der Anomalie-Informationen in den Anomalie-Informationen reflektiert.

8. System (100) nach Anspruch 1, wobei der Server (104) dazu eingerichtet ist, Zielortinformationen von dem Benutzer des autonomen Fahrzeugs (102) zu empfangen, um auf der Grundlage der Gefahrenzoneninformationen für autonomes Fahren einen Routenplan zum Zielort zu generieren.

9. Verfahren (600), das auf einem Server (104) ausgeführt wird, zum Bereitstellen eines Sicherheitskartendienstes für autonomes Fahren, umfassend:
Empfangen (602) von Anomalie-Informationen eines autonomen Fahrsystems von einem autonomen Fahrzeug (102), das innerhalb eines spezifischen Gebiets fährt;
Generieren (604) von Gefahrenzoneninformationen für autonomes Fahren auf der Grundlage eines oder mehrerer des Ereignisortes der Anomalie-Informationen oder von Identifikationsinformationen des autonomen Fahrzeugs (103); und
Bereitstellen (606) der generierten Gefahrenzoneninformationen für autonomes Fahren in Verbindung mit einer Karte des spezifischen Gebiets,
wobei das autonome Fahrzeug (102) die Anomalie-Informationen des autonomen Fahrsystems unter Verwendung einer verschlüsselungsbasierten Datenschutzsicherstellungstechnik verschlüsselt und dann die verschlüsselten Anomalie-Informationen an den Server (104) sendet, und
die verschlüsselungsbasierte Datenschutzsicherstellungstechnik eines oder mehrere von homomorpher Verschlüsselung oder funktionaler Verschlüsselung umfasst,
wobei das Generieren der Gefahrenzoneninformationen für autonomes Fahren das Klassifizieren der verschlüsselten Anomalie-Informationen auf der Grundlage eines oder mehrerer des Ereignisortes der Anomalie-Informationen und von Identifikationsinformationen des autonomen Fahrzeugs (102) umfasst, und wobei nur dann, wenn die Anzahl der verschlüsselten Anomalie-Informationen, die gemäß einem spezifischen Ort oder spezifischen Identifikationsinformationen klassifiziert sind, größer als ein voreingestellter Schwellenwert ist, der Server (104) für den Sicherheitskartendienst für autonomes Fahren die entsprechenden Anomalie-Informationen entschlüsselt, um die Gefahrenzoneninformationen für autonomes Fahren zu generieren.

10. Verfahren (600) nach Anspruch 9, wobei die Anomalie-Informationen des autonomen Fahrsystems auf der Grundlage eines oder mehrerer von Folgendem generiert werden: ob eine Übernahmeanforderungsmeldung in dem autonomen Fahrzeug (102) generiert wurde, ob eine Fahrerintervention beim Fahren des autonomen Fahrzeugs stattgefunden hat, oder ob eine Fehlermeldung des autonomen Fahrsystems generiert wurde.

## Revendications

1. Système (100) destiné à fournir un service de carte de sécurité pour la conduite autonome, comprenant :
un véhicule autonome (102) configuré pour transmettre des informations d'anomalie d'un système de conduite autonome acquises pendant la conduite du véhicule (102) ; et
un serveur (104) destiné à fournir un service de carte de sécurité, configuré pour recevoir les informations d'anomalie du système de conduite autonome provenant d'un ou plusieurs des véhicules autonomes circulant dans une zone spécifique, générer des informations de zone de danger pour la conduite autonome sur la base d'une ou plusieurs parmi la localisation d'occurrence des informations d'anomalie ou des informations d'identification du véhicule autonome (102), et fournir les informations de zone de danger pour la conduite autonome générées conjointement avec une carte de la zone spécifique,
dans lequel le véhicule autonome (102) est configuré pour crypter les informations d'anomalie du système de conduite autonome en utilisant une technique d'assurance de confidentialité basée sur le cryptage, puis est configuré pour transmettre les informations d'anomalie cryptées au serveur (104) afin de fournir un service de carte de sécurité pour la conduite autonome, et
la technique d'assurance de confidentialité basée sur le cryptage comprend un ou pliseurs parmi un cryptage homomorphe ou un cryptage fonctionnel,
dans lequel le serveur (104) est configuré pour classer les informations cryptées relatives aux anomalies sur la base d'une ou plusieurs parmi la localisation d'occurrence des informations d'anomalie ou des informations d'identification du véhicule autonome (102), et
uniquement lorsque le nombre d'informations d'anomalie cryptées classées selon une localisation spécifique ou des informations d'identification spécifiques est supérieur à une valeur seuil prédéfinie, le serveur (104) pour le service de carte de sécurité pour la conduite autonome est configuré pour décrypter les informations d'anomalie correspondantes afin de générer les informations de zone de danger pour la conduite autonome.

2. Système (100) selon la revendication 1, dans lequel les informations d'anomalie du système de conduite autonome sont générées sur la base d'un ou plusieurs des éléments suivants : si un message de demande de reprise de contrôle a été généré dans le véhicule autonome (102), si une intervention du conducteur s'est produite pendant la conduite du véhicule autonome (102) ou si un message d'erreur du système de conduite autonome a été généré.

3. Système (100) selon la revendication 1, dans lequel les informations d'identification du véhicule autonome (102) comprennent un numéro d'identification du véhicule Fahrzeugidentifikationsnummer (Vehicle Identification Number, VIN) du véhicule autonome (102).

4. Système (100) selon la revendication 1, dans lequel, lorsque le véhicule autonome (102) se trouve dans une zone prédéterminée de restriction de transmission d'informations, le véhicule autonome (102) est configuré pour cesser de transmettre les informations d'anomalie.

5. Système (100) selon la revendication 1, dans lequel, lorsque le véhicule autonome (102) se trouve à une distance prédéterminée de l'origine ou de la destination d'un itinéraire défini par un utilisateur du véhicule autonome (102), le véhicule autonome (102) est configuré pour cesser de transmettre les informations d'anomalie.

6. Système (100) selon la revendication 1, dans lequel le véhicule autonome (102) est configuré pour transmettre les informations d'anomalie sur la base d'un débit de transmission d'informations prédéterminé.

7. Système (100) selon la revendication 1, dans lequel le serveur (104) est configuré pour générer les informations de zone de danger pour la conduite autonome en reflétant en outre des informations environnementales liées à la localisation d'occurrence des informations d'anomalie dans les informations d'anomalie.

8. Système (100) selon la revendication 1, dans lequel le serveur (104) est configuré pour recevoir des informations de destination de l'utilisateur du véhicule autonome (102) afin de générer un plan d'itinéraire vers la destination sur la base des informations de zone de danger pour la conduite autonome.

9. Procédé (600) qui est exécuté sur un serveur (104) pour fournir un service de carte de sécurité pour la conduite autonome, comprenant les étapes consistant à :
recevoir (602) des informations d'anomalie d'un système de conduite autonome provenant d'un véhicule autonome (102) circulant dans une zone spécifique ;
générer (604) des informations de zone de danger pour la conduite autonome sur la base d'une ou plusieurs parmi la localisation d'occurrence des informations d'anomalie ou des informations d'identification du véhicule autonome (103) ; et
fournir (606) les informations de zone de danger pour la conduite autonome générées conjointement avec une carte de la zone spécifique,
dans lequel le véhicule autonome (102) crypte les informations d'anomalie du système de conduite autonome en utilisant une technique d'assurance de confidentialité basée sur le cryptage, puis transmet les informations d'anomalie cryptées au serveur (104), et
la technique d'assurance de confidentialité basée sur le cryptage comprend un ou plusieurs parmi uncryptage homomorphe ou un cryptage fonctionnel,
dans lequel l'étape consistant à générer des informations de zone de danger pour la conduite autonome comprend le fait de classer les informations d'anomalie cryptées sur la base de la localisation d'occurrence des informations d'anomalie et/ou d'informations d'identification du véhicule autonome (102), et dans lequel uniquement lorsque le nombre d'informations d'anomalie cryptées classées selon une localisation spécifique ou des informations d'identification spécifiques est supérieur à une valeur seuil prédéfinie, le serveur (104) pour le service de carte de sécurité pour la conduite autonome décrypte les informations d'anomalie correspondantes afin de générer les informations de zone de danger pour la conduite autonome.

10. Procédé (600) selon la revendication 9, dans lequel les informations d'anomalie du système de conduite autonome sont générées sur la base d'un ou plusieurs des éléments suivants : si un message de demande de reprise de contrôle a été généré dans le véhicule autonome (102), si une intervention du conducteur s'est produite pendant la conduite du véhicule autonome (102) ou si un message d'erreur du système de conduite autonome a été généré.
